# EUROPÄISCHE PATENTSCHRIFT

(11) **EP 1 484 102 B1**
(45) Veröffentlichungstag und Bekanntmachung des Hinweises auf die Patenterteilung: **28.03.2018**
(21) Anmeldenummer: 04102254.2
(22) Anmeldetag: 24.05.2004
(51) Int. Cl.: B01D 53/14, F02C 3/34, F02C 7/143, F02C 1/10, F02C 7/14

(54) **Verfahren zur Erzeugung von Energie in einer eine Gasturbine umfassenden Energieerzeugungsanlage sowie Energieerzeugungsanlage**
Method and apparatus to generate power in a gas turbine powerplant
Installation et méthode pour la production d'énergie dans un groupe électrogène comprenant une turbine à gaz

(30) Priorität: 02.06.2003 DE 10325111
(43) Veröffentlichungstag der Anmeldung: 08.12.2004
(73) Patentinhaber: Ansaldo Energia IP UK Limited, London W1G 9DQ (GB)
(72) Erfinder: Bartlett, Michael Adam, 80339 München (DE); Griffin, Timothy, 5408 Ennetbaden (CH); Holmberg, Daniel, 26243 Ängelholm (SE)
(74) Vertreter: Bernotti, Andrea

(56) Entgegenhaltungen:
- EP-A1- 0 939 199
- EP-A1- 0 953 748
- FR-A1- 2 825 935

## Beschreibung

### TECHNISCHES GEBIET

Die vorliegende Erfindung bezieht sich auf das Gebiet der Energieerzeugungstechnik. Sie betrifft ein Verfahren zur Erzeugung von Energie gemäss dem Oberbegriff des Anspruchs 1. Sie betrifft weiterhin eine Energieerzeugungsanlage zur Durchführung des Verfahrens gemäss dem Oberbegriff des Anspruchs 10.

Ein solches Verfahren und eine solche Anlage sind z. B. aus der WO-A1-02/103176 bekannt.

### STAND DER TECHNIK

Während des vergangenen Jahrzehnts ist das Interesse an umweltfreundlichen Kraftwerken mit niedriger Emission erheblich gestiegen. Als Antwort auf eine möglicherweise hinsichtlich des Kohlenstoffs beschränkte Ökonomie ist die Möglichkeit von besonderem Interesse, Energie aus fossilen Brennstoffen mit niedriger Kohlendioxid-Emission zu erzeugen. Es sind bereits verschiedene Projekte mit dem Ziel gestartet worden, auf Gasturbinen basierende Prozesse mit geringer Emission zu entwickeln. Es gibt drei herkömmliche Wege zur Reduzierung der CO₂-Emission aus solchen Kraftwerken:
1. Methoden zum ausgangsseitigen Abfangen des CO₂: Bei diesen Methoden wird das während der Verbrennung erzeugte CO₂ aus den Abgasen durch einen Absorptionsprozess, Membranen, kältetechnische Prozesse oder Kombinationen davon entfernt.
2. Methoden zur Kohlenstoffentreicherung des Brennstoffs: Bei diesen Methoden wird der Brennstoff vor der Verbrennung in H₂ und CO₂ umgewandelt und es wird so möglich, den Kohlenstoffgehalt des Brennstoffs vor dem Eintritt in die Gasturbine abzufangen.
3. Sauerstoff-Brennstoff-Prozesse ("oxy-fuel process"): Bei diesen wird nahezu reiner Sauerstoff anstelle von Luft als Oxidationsmittel verwendet, wodurch ein Rauchgas aus Kohlendioxid und Wasser entsteht.

In einem herkömmlichen ausgangsseitigen Abfangprozess (s.o. Variante (1)) wird das CO₂ abgefangen, nachdem das Rauchgas im Entspannungsteil bzw. der Turbine der Gasturbine entspannt worden ist, d.h., der Absorptionsdruck beträgt 1 atm. Der hauptsächliche Nachteil dieser Randbedingung besteht darin, dass der CO₂-Partialdruck wegen der geringen CO₂-Konzentration im Rauchgas (typischerweise 3-4 Vol.- %) sehr klein ist und daher grosse und aufwendige Vorrichtungen zur Entfernung des CO₂ benötigt werden. Die CO₂-Konzentration am Schornstein und damit der Partialdruck könne zwar durch teilweise Rückführung des Rauchgases zum Verdichter der Gasturbine erhöht werden (siehe dazu z. B. die US-A-5,832,712), sie bleiben jedoch ziemlich gering (ca. 6-10 Vol.- %).

Eine neue Variation der ersten Variante, die auf Gasturbinen-Kreisprozesse mit Rauchgasrückführung anwendbar ist, verschiebt den Ort der CO₂-Abtrennung hinter den Verdichter oder zu einer Zwischenkühlungsstufe. Dadurch wird der Partialdruck des Kohlendioxids deutlich angehoben und so die treibende Kraft für die Abtrennung verbessert. Darüber hinaus wird das Volumen des zu behandelnden Gases beträchtlich reduziert. Diese beiden Faktoren führen zu einer Reduktion der Grösse der CO₂-Abtrennvorrichtung sowie deren Energieströmen und verringern so die Kosten pro nicht emittierter Tonne Kohlendioxid. Um die Abgabe von Kohlendioxid an die Atmosphäre weiter zu verringern, können die Verbrennungsgase mit Sauerstoff angereichert werden, was ein höheres Rauchgasrückführungsverhältnis und einen geringeren Massenstrom zum Schornstein ermöglicht. Darüber hinaus können Wärmequellen wie die Zwischenkühlung zum Betrieb des Abtrennungsprozesses herangezogen werden. Diese Art der Prozessführung wird als Hochdruck-Abtrennung bezeichnet und ist in den Fig. 2 und 3 der eingangs genannten WO-A1-02/103176 dargestellt.

Wie eine genauere Betrachtung der Hochdruck-Abtrennung zeigt, ist es das Ziel dieser Entwicklung, den Partialdruck des Kohlendioxids in der Abtrenneinheit anzuheben. Wenn der überwiegende Anteil des Kohlendioxids (80-95%) im komprimierten Arbeitsmedium entfernt wird, ergeben sich niedrige Kohlendioxidkonzentrationen im Abgas und folgerichtig in der Rückführung zum Verdichter und der Kohlendioxid-Abtrenneinheit. Diese Strategie einer hohen Abtrennungsrate reduziert die Menge des Kohlendioxids, das den Kreisprozess im nicht zurückgeführten Abgas verlässt, während der Aufbau einer Kohlendioxidkonzentration im Kreisprozess verhindert wird. Die Einlassluft kann zwar mit Sauerstoff angereichert werden, um so ein höheres RauchgasRückführungsverhältnis zu ermöglichen. Der hauptsächliche Effekt ist es jedoch, die Kohlendioxidemissionen weiter zu begrenzen, anstatt die Kohlendioxidkonzentration zu erhöhen. Zusammenfassend kann gesagt werden, dass eine Abtrennung eines Grossteils des Kohlendioxids nach dem Verdichter in einer Hochdruck-Abtrennung zu eher geringen Kohlendioxid-Partialdrücken während der Abtrennung führt, was dem Entwicklungsziel entgegenwirkt. Eine solche Konfiguration ist in der Druckschrift WO-A1-02/103176 beschrieben und in der nachfolgenden Tabelle 1 durch die Fälle 1 und 3 für einen Kreisprozess mit Luft bzw. Sauerstoff-angereicherter Luft erfasst.

Wenn nur ein Teil des Kohlendioxids in einem Hochdruck-CO₂-Abtrennungsprozess entfernt wird, ist es möglich, den CO₂-Partialdruck in der Abtrenneinheit deutlich anzuheben, insbesondere, wenn die Sauerstoffanreicherung eingesetzt wird. Die Tabelle 1 illustriert diesen Effekt, wobei die CO₂-Konzentration von 5% (molar) im Fall 3 auf 14% im Fall 4 ansteigt. Dieser Anstieg in der Konzentration kompensiert teilweise die niedrigere CO₂-Abtrennrate und ermöglicht es so, 53% des im Kreisprozess erzeugten Kohlendioxids abzufangen, obgleich nur 20% des im Arbeitsmedium enthaltenen CO₂ entfernt wird. Wenn der Kreisprozess ausschliesslich mit Luft betrieben wird, ist der Aufbau des CO₂ im Kreisprozess durch die geringere Menge an rückgeführtem Rauchgas begrenzt; daher ist die Methode der teilweisen Abtrennung weniger effektiv (siehe die Fälle 1 und 2 in Tabelle 1).

Während die Kohlendioxidemissionen ansteigen, wenn nur ein Teil des Kohlendioxids aus dem Arbeitsmedium abgetrennt wird, können Einsparungen bei den Ausrüstungskosten durch eine Verringerung der Abtrennanforderungen und eine Erhöhung der den Prozess treibenden Kräfte erreicht werden. Die optimale Abtrenneffektivität ergibt sich aus einem Kompromiss zwischen den durch einen erhöhten Kohlendioxidausstoss in die Atmosphäre verursachten Kosten (bei Annahme einer CO₂-Steuer) und den Einsparungen bei den Betriebs- und Ausrüstungskosten gegenüber einem noch besseren Abtrennprozess.

**Tabelle 1**

| Fall | O₂-Quelle | CO₂-Entfernung in Abtrenneinheit (in %) | CO₂-Entfernung insgesamt (in %) | Molarer Anteil CO₂ zur Abtrenneinheit |
|---|---|---|---|---|
| 1 | Luft | 80 | 61 | 0,04 |
| 2 | Luft | 20 | 26 | 0,08 |
| 3 | angereicherte Luft (66% O₂) | 80 | 93 | 0,05 |
| 4 | angereicherte Luft (66% O₂) | 20 | 53 | 0,14 |

Im vorangegangenen Abschnitt wurde die konzeptionelle Verbesserung der herkömmlichen Hochdruck-Abtrennung beschrieben. Es können jedoch durch den Einsatz einer als Teilstromabtrennung bezeichneten Methode weitere thermodynamische und ökonomische Verbesserungen erzielt werden. Ein Nachteil der Hochdruck-CO₂-Abtrennung ist es, dass grosse Wärmetauscher benötigt werden, um das Arbeitsmedium abzukühlen und wieder aufzuwärmen, wenn ein kalter CO₂-Abtrennungsprozess benutzt wird, wie z. B. das sogenannte "amine scrubbing". Für einen guten Wirkungsgrad des Kraftwerks ist es wichtig, die Auslasstemperatur des Verdichters beizubehalten und so den Brennstoffverbrauch gering zu halten. Wenn man berücksichtigt, dass eine niedrige Abtrennrate für das Kohlendioxid wünschenswert ist (s.o.), kann eine neue Abtrennstrategie formuliert werden, um die Kapitalkosten zu verringern, den Wirkungsgrad des Kreisprozesses zu erhöhen und, insbesondere im Fall der Einspeisung von angereicherter Luft, den Partialdruck des zu entfernenden CO₂ zu erhöhen, nämlich:
- eine hohe CO₂-Abtrennrate bei einem Teilstrom am Verdichterausgang.

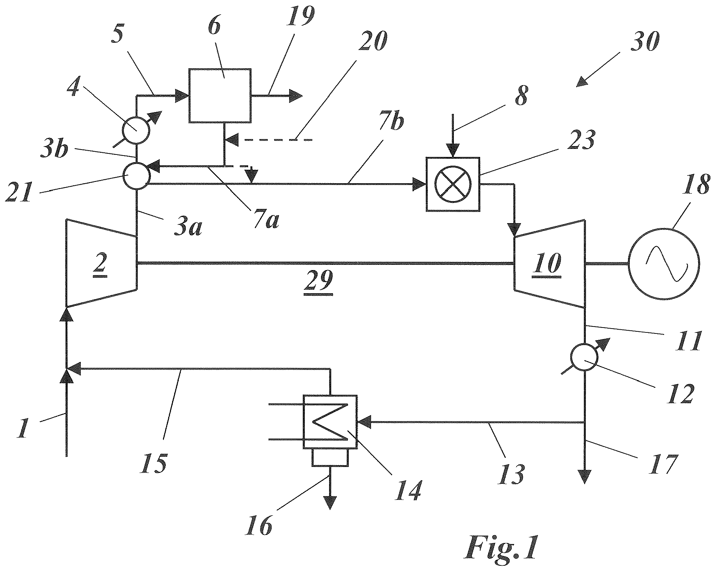

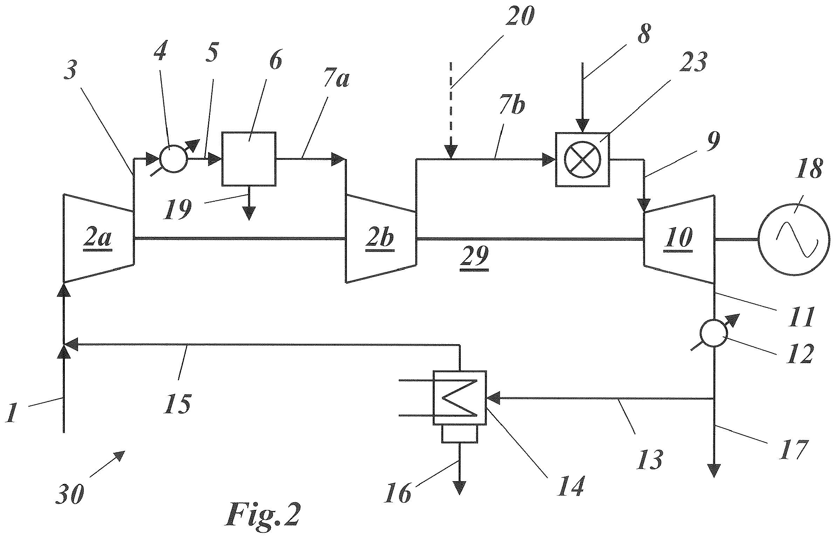

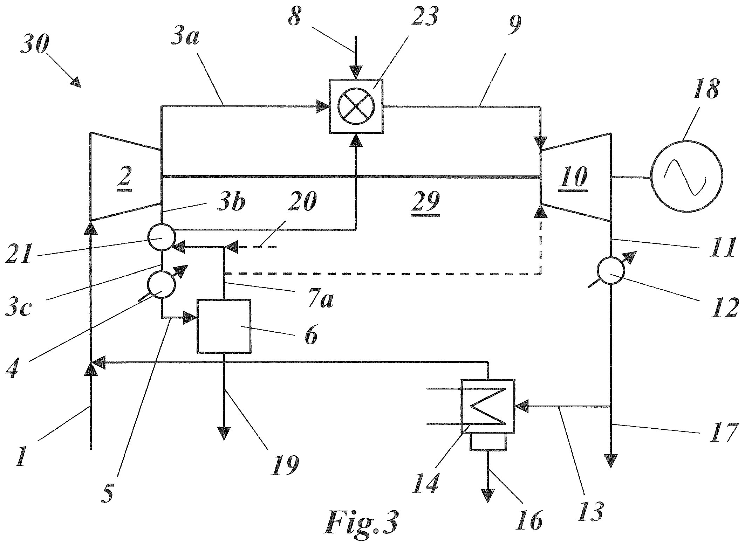

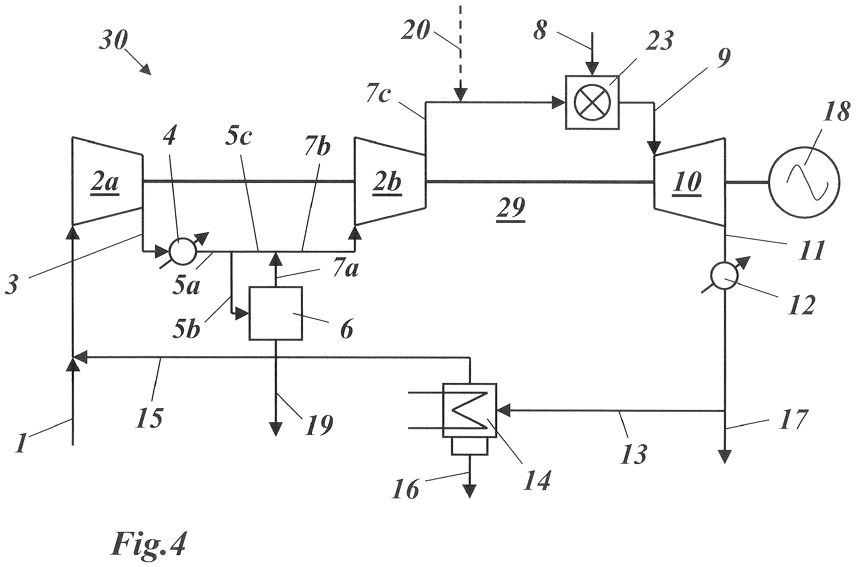

Eine entsprechende Konfiguration ist in den später noch erläuterten Fig. 3 und 4 wiedergegeben. Wie man an den Figuren sehen kann, ist das Arbeitsmedium nach dem Verdichter in zwei Ströme unterteilt. Der eine Strom geht in den CO₂-Abtrennprozess, während der andere direkt zur Brennkammer geschickt wird. Aus diesem Grunde wird die Einlasstemperatur der Verbrennung für den Kreisprozess mit Teilstromabtrennung nicht so sehr reduziert wie im Vollstromfall der Fig. 1 und 2. Da nur ein Teilstrom in der Trenneinheit behandelt wird, ergeben sich deutlich geringere Baugrössen der Wärmetauscher und der sonstigen Anlagenteile für den Prozess. Der Trennprozess selber wird allerdings anspruchsvoller. Ggf. ist eine Membran in Verbindung mit dem CO₂-Abtrennprozess notwendig, um die Übernahme von Verunreinigungen in die Turbomaschinen zu verringern. Wenn die Luft mit einem hochreinen Sauerstoffstrom angereichert wird, der z.B. aus einer kältetechnischen Anlage stammt, sollte der Sauerstoff vorgewärmt werden, um die Temperaturverluste des Arbeitsmediums vor der Verbrennung zu reduzieren. Wenn Zwischenkühlung eingesetzt wird, sollte die abgeführte Wärme benutzt werden, um das Lösungsmittel zu regenerieren (siehe Fig. 4). Dies ist eine wichtige Möglichkeit zur Ausnutzung der Wärme, die normalerweise in Kombikraftwerken nicht genutzt werden kann.

Ein wesentlicher Vorteil des Hochdruck-Abtrennungs-Konzeptes gegenüber beispielsweise den Sauerstoff-Brennstoff-Konzepten besteht darin, dass die vorhandenen Turbomaschinen mit nur geringen Änderungen genutzt werden können. Dies geht deshalb, weil die Eigenschaften des Arbeitsmediums sehr ähnlich zu denen in vorhandenen Gasturbinen sind. Inhärent ist den Hochdruck-Abtrennungs-Konzepten jedoch die Tatsache, dass das Arbeitsmedium zwischen dem Verdichter und der Turbine entnommen wird. Wenn vorhandene Turbomaschinen verwendet werden, bedeutet dies einen beträchtlichen Verlust an Ausgangsleistung als Folge sowohl der Abnahme des Massenstroms im Expansionsteil als auch der Tatsache, dass der Druck in den Expansionsteil hinein abfallen muss, um einen konstanten Volumenstrom aufrechtzuerhalten. Folglich sollte der Massenstrom des Arbeitsmediums erhöht werden, damit die Bedingungen im Auslegungspunkt wiederhergestellt werden können. Dies kann durch eine der beiden folgenden Massnahmen erreicht werden:
- Sauerstoffeinspritzung, oder
- Befeuchtung.

Die Sauerstoffeinspritzung ist bereits weiter oben als Mittel zur Begrenzung der CO₂-Emissionen besprochen worden. Sie dient jedoch - wenn sie nach der Verdichtung durchgeführt wird - auch dazu, die konstruktiv vorgegebenen Bedingungen (Druck, Massenstrom) am Einlass des Expansionsteils aufrechtzuerhalten. Die Befeuchtung kann entweder durch Wassereinspritzung, Dampfeinspritzung oder durch Einsatz eines Befeuchtungsturmes realisiert werden. Alle drei Methoden kompensieren den Verlust des CO₂ aus dem Arbeitsmedium durch das Hinzufügen von Wasserdampf. Wie bei der Sauerstoffinjektion werden dadurch die konstruktiv vorgegebenen Bedingungen am Einlass des Expansionsteils wiederhergestellt und der Wirkungsgrad des Kreisprozesses wird massiv verbessert. Diese Methode sollte sowohl bei den herkömmlichen Hochdruck-Abtrennungs-Prozessen als auch solchen mit Teilstrom-Abtrennung angesetzt werden.

Aus der Druckschrift US 5,137,550 ist ein Kaskaden-Verfahren zur Entfernung von sauren Gasen bekannt, das zu Erzeugnissen führt, die weitgehend frei von schwefelhaltigen Verbindungen sind und eine verringerte Konzentration von CO₂ aufweisen.

Aus der Druckschrift US 4,430,312 ist ein verbessertes Verfahren zur katalytischen Entfernung von CO2 bekannt, bei welchem der Absorptions-Wirkungsgrad durch den Zusatz von Natrium- oder Kalium-Vanadat und Natrium- oder Kalium-Borat verbessert wird.

Die Druckschrift US 6,263,661 offenbart eine Anlage zur Energieerzeugung mit einer Gasturbine mit Abgasrückführung sowie Mitteln zur Kondensierung von Wasser aus den Abgasen.

Die Druckschrift US 2002/043063 zeigt ein Kombikraftwerk mit Abgasrezirkulation, das speziell für einen erweiterten Teillastbereich ausgelegt ist.

Die Druckschrift US 6,247,302 schliesslich lehrt ein Gasturbinen-Kraftwerk mit einer Vorrichtung zum Eindüsen von Wassertropfen in die verdichtete Verbrennungsluft.

### DARSTELLUNG DER ERFINDUNG

Es ist Aufgabe der Erfindung, ein Verfahren zur Erzeugung von Energie in einer eine Gasturbine umfassenden Energieerzeugungsanlage anzugeben, bei welchem nach dem Hochdruck-Abtrenn-Konzept Kohlendioxid entfernt wird, und welches sich durch eine verringerte Baugrösse der Abtrenneinrichtungen sowie reduzierte Energie- und Anlagenkosten auszeichnet, sowie eine Energieerzeugungsanlage zur Durchführung des Verfahrens anzugeben.

Die Aufgabe wird durch die Gesamtheit der Merkmale der Ansprüche 1 und 14 gelöst. Die Erfindung gibt ein Verfahren an, mit welchem die für eine CO₂-Abtrennung benötigte Ausrüstung in einem Kraftwerk mit halbgeschlossenem Kreisprozess durch Hochdruck-CO₂-Abtrennung verringert werden kann. Darüber hinaus können die Energiekosten für die CO₂-Abtrennung reduziert werden. Die Erfindung macht Gebrauch von der CO₂-Abtrennung bei erhöhten Drücken, d.h., nach dem Verdichter oder ggf. zwischen zwei Verdichterstufen, wenn eine Zwischenkühlung vorhanden ist. Wichtig ist, dass nur ein Teil (10-70%) des Kohlendioxids in dem verdichteten Arbeitsmedium abgetrennt wird, so dass sich das während der Verbrennung gebildete Kohlendioxid im Kreisprozess anreichern kann. Im Vergleich zu Prozessen mit einem hohen Grad an Kohlendioxidabtrennung aus dem verdichteten Arbeitsmedium sind die treibenden Kräfte für die Abtrennung höher und die Grösse der CO₂-Abtrennvorrichtung kann weiter verringert werden. Dies führt zu Einsparungen sowohl bei den Ausrüstungskosten als auch beim Energieverbrauch des Abtrennprozesses. Eine wichtige Abänderung besteht darin, einen Teil des Gases vom Verdichter direkt zur Brennkammer zu führen, und nur den Rest zur CO₂-Abtrennvorrichtung. Aus dieser Art der Prozessführung erwachsen zahlreiche Vorteile; so kann beispielsweise die Grösse der CO₂-Abtrennvorrichtung und des Gas-Wärmetauschers verringert werden, weil ein kleinerer Gasstrom verarbeitet wird. Nach der CO₂-Abtrennung kann der verbleibende Teilstrom zur Brennkammer geführt oder sogar zur Kühlung der Turbine herangezogen werden. In beiden Fällen wird die Brennkammereintrittstemperatur erhöht und dadurch der Brennstoffverbrauch verringert, so dass der thermische Wirkungsgrad der Gasturbine im Vergleich zu vorbekannten Hochdruck-Abtrennungsverfahren verbessert wird.

Eine Weiterbildung der Erfindung stellt Verfahren vor, welche die Ausgangsleistung und den mit der Hochdruck-CO₂-Abtrennung verbundenen Anlagen-Wirkungsgrad verbessern. Sauerstoff oder Wasserdampf werden dabei durch verschiedene Verfahren nach dem Verdichter zugesetzt, um den Verlust von Arbeitsmedium zwischen Verdichter und Expansionsteil zu kompensieren. Dies ermöglicht den Einsatz von vorhandenen Gasturbinen für die Hochdruck-CO₂-Abtrennung, ohne dass der Expansionsteil der Gasturbine angepasst werden muss oder andere Nachteile bei der Ausgangsleistung oder dem Anlagen-Wirkungsgrad in Kauf genommen werden müssen.

Alle Teile der Erfindung sind dabei für den Einsatz bei einem einfachen Gasturbinenprozess oder einem Kombiprozess vorgesehen, sofern nicht ausdrücklich etwas anderes gesagt wird. Der einfache Gasturbinenprozess ist derjenige, bei dem die Wärme der Abgase aus der Gasturbine nicht zur Erzeugung zusätzlicher Energie benutzt werden, während der Kombiprozess mit Hilfe der Abgase Dampf für eine Dampfturbine erzeugt.

Das erfindungsgemässe Verfahren ist dadurch gekennzeichnet, dass der gesamte Strom des verdichteten Gases in einen grösseren und kleineren Teilstrom unterteilt wird, und dass nur der kleinere Teilstrom durch den CO₂-Separator geführt und dort mehr als 50%, vorzugsweise zwischen 70% und 99%, des im verdichteten Gas enthaltenen Kohlendioxids aus dem verdichteten Gas entfernt werden.

Hierbei wird das aus dem CO₂-Separator kommende verdichtete Gas entweder direkt zur Brennkammer geleitet, oder das aus dem CO₂-Separator kommende verdichtete Gas entzieht zunächst in einem Gas/Gas-Wärmetauscher dem aus dem ersten Verdichter kommenden verdichteten Gas Wärme und wird dann zur Brennkammer geleitet,, oder das aus dem CO₂-Separator kommende verdichtete Gas wird in einem zweiten Verdichter der Gasturbine weiter verdichtet, und das weiter verdichtete Gas wird der Brennkammer zugeführt.

Grundsätzlich ist es von Vorteil, dass das verdichtete Gas vor dem Eintritt in den CO₂-Separator in einem Wärmetauscher abgekühlt wird.

Weiterhin ist es denkbar, dass das in der Turbine entspannte Rauchgas in einem Wärmetauscher abgekühlt oder in einem Abhitzedampferzeuger zur Erzeugung von Dampf verwendet wird.

Auch ist es von Vorteil, wenn dem zum Eingang des ersten Verdichters zurückgeführten Teilstrom des Rauchgases vor der Vermischung mit dem Luft enthaltenden Gas in einem Kondensator Wasser entzogen wird.

Weiterhin ist es denkbar, dass dem aus dem CO₂-Separator kommenden verdichteten Gas, ggf. nach einer weiteren Verdichtung in einem zweiten Verdichter, Sauerstoff zugesetzt wird, und dass als Luft mit Sauerstoff angereicherte Luft verwendet wird.

Vorteile hinsichtlich des Wirkungsgrades ergeben sich, wenn das aus dem CO₂-Separator kommende verdichtete Gas in einem Gas/Gas-Wärmetauscher vor dem Eintritt in die Brennkammer durch das aus der Turbine austretende heisse Rauchgas vorgewärmt wird.

Auch kann es vorteilhaft sein, wenn mittels des aus der Turbine austretenden heissen Rauchgases Dampf erzeugt und der erzeugte Dampf teilweise in die Brennkammer eingespritzt und teilweise im CO₂-Separator verwendet wird, und wenn das aus dem CO₂-Separator kommende verdichtete Gas in einem Nachverdichter nachverdichtet wird, und das nachverdichtete Gas in einem Gas/Gas-Wärmetauscher mit dem aus dem ersten Verdichter kommenden verdichteten Gas Wärme austauscht.

Weiterhin kann es von Vorteil sein, wenn das aus dem CO₂-Separator kommende verdichtete Gas vor dem Eintritt in die Brennkammer in einer Befeuchtungsvorrichtung befeuchtet wird, und das befeuchtete Gas vor dem Eintritt in die Brennkammer in einem Gas/Gas-Wärmetauscher dem aus dem ersten Verdichter austretenden verdichteten Gas Wärme entzieht.

Die erfindungsgemässe Energieerzeugungsanlage ist dadurch gekennzeichnet, dass vom Ausgang des ersten Verdichters zwei Verbindungsleitungen parallel zum ersten Eingang der Brennkammer führen, und dass der CO₂-Separator in eine dieser Verbindungsleitungen eingefügt ist.

Ausgestaltungen der Energieerzeugungsanlage ergeben sich aus den abhängigen Ansprüchen 15 bis 17.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: ein vereinfachtes Schema einer Energieerzeugungsanlage mit einstufiger Verdichtung und CO₂-Abtrennung aus dem Vollstrom des verdichteten Gases;
- Fig. 2: ein vereinfachtes Schema einer Energieerzeugungsanlage mit zweistufiger Verdichtung mit Zwischenkühlung und CO₂-Abtrennung aus dem Vollstrom des verdichteten Gases;
- Fig. 3: ein vereinfachtes Schema einer Energieerzeugungsanlage gemäss einem Ausführungsbeispiel der Erfindung mit einstufiger Verdichtung und CO₂-Abtrennung aus einem Teilstrom des verdichteten Gases;
- Fig. 4: ein vereinfachtes Schema einer Energieerzeugungsanlage mit zweistufiger Verdichtung mit Zwischenkühlung und CO₂-Abtrennung aus einem Teilstrom des verdichteten Gases;
- Fig. 5: eine Energieerzeugungsanlage mit einstufiger Verdichtung und CO₂-Abtrennung aus dem Vollstrom des verdichteten Gases und Rekuperation mittels eines Gas/Gas-Wärmetauschers;
- Fig. 6: eine Energieerzeugungsanlage mit CO₂-Abtrennung aus dem Vollstrom des verdichteten Gases sowie Dampfeinspritzung und Nachverdichtung; und
- Fig. 7: eine Energieerzeugungsanlage mit einstufiger Verdichtung und CO₂-Abtrennung aus dem Vollstrom des verdichteten Gases und Befeuchtung des verdichteten Gases nach der CO₂-Abtrennung.

### WEGE ZUR AUSFÜHRUNG DER ERFINDUNG

In der eingangs genannten Druckschrift WO-A1-02/103176 ist wie in der vorliegenden Fig. 1 eine Energieerzeugungsanlage 30 mit einer Gasturbine 29 beschrieben, bei der Luft oder mit Sauerstoff angereicherte Luft 1 mit zurückgeführtem Rauchgas 15 vermischt und dann in den Verdichter 2 geleitet wird. Das verdichtete Gas 3a, 3b strömt dann zu einem Wärmetauscher 4, wo es auf ein für die CO₂-Absorption geeignetes Temperaturniveau (typischerweise 30-60°C) abgekühlt wird. Das relativ kühle verdichtete Gas 5 tritt dann in einen CO₂-Separator 6 ein, wo (und das ist wichtig) 80-90% des CO₂ abgetrennt werden. Das verdichtete Gas 7a, 7b am Ausgang des CO₂-Separators 6 wird dann zur Brennkammer 23 geleitet und dort mit einem gasförmigen oder flüssigen Brennstoff 8, üblicherweise Erdgas, verbrannt. Das heisse Rauchgas 9 wird dann in einer Turbine (bzw. einem Expansionsteil) 10 entspannt, die ihrerseits den Verdichter 2 antreibt und mittels eines Generators 18 elektrische Energie erzeugt. Nach der Entspannung in der Turbine 10 tritt das Rauchgas in einen Abhitzedampferzeuger (heat recovery steam generator HRSG) 12 ein oder wird einfach in einem Wärmetauscher abgekühlt. Die bevorzugte Vorgehensweise ist die Benutzung eines Abhitzedampferzeugers, der mit einer Dampfturbine verbunden ist (Kombiprozess). Hierdurch werden die Ausgangsleistung und der Wirkungsgrad der Anlage erhöht. Ein grosser Teil des kalten Rauchgases 13 wird schliesslich zurückgeführt und in einem Kondensator 14 noch weiter abgekühlt, so dass der meiste Teil des enthaltenen Wassers auskondensiert und als kondensiertes Wasser 16 entnommen werden kann. Das zurückgeführte Rauchgas 15 wird dann mit der angesaugten Luft bzw. angereicherten Luft 1 vermischt. Der Rest des kalten Rauchgases wird als emittiertes Gas 17 an einen Schornstein oder dgl. abgegeben.

Die genannte Druckschrift schliesst auch einen Kreisprozess ein, in dem die CO₂-Abtrennung zwischen zwei Verdichterstufen stattfindet (siehe Fig. 2; Verdichter 2a, 2b). Dieser Kreisprozess macht von der sogenannten Zwischenkühlung ("intercooling") Gebrauch, um den Leistungsverbrauch für den Verdichter zu verringern. Das Grundprinzip der Zwischenkühlung besteht darin, zunächst das Gas teilweise zu verdichten (Verdichter 2a) und es anschliessend abzukühlen (Wärmetauscher 4 als Zwischenkühler), bevor die endgültige Verdichtung auf den gewünschten Druck vorgenommen wird (Verdichter 2b). Hierdurch wird die Kompressionsarbeit verringert und so die Ausgangsleistung des Kreisprozesses erhöht. Die CO₂-Abtrennung erfolgt nach der Zwischenkühlung und vor der endgültigen Verdichtung. Dies hat zwei Vorteile gegenüber dem herkömmlichen Prozess ohne Zwischenkühlung: Der Strom 3 des verdichteten Gases vom Verdichter muss ohnehin vor der CO₂-Abtrennung (auf ca. 30-60°C) abgekühlt werden, und dies kann bei der Zwischenkühlung geschehen. Anders ausgedrückt erfüllt der Zwischenkühler zwei Aufgaben zu gleicher Zeit; er reduziert die Leistungsanforderungen an den Verdichter und kühlt gleichzeitig das Gas auf ein für die CO₂-Abtrennung wünschenswertes Temperaturniveau.

Ein Problem besteht bei der oben beschriebenen Art von Prozessabläufen: Da die CO₂-Abtrennrate ziemlich hoch ist, ist die CO₂-Konzentration im CO₂-Separator 6 relativ niedrig und führt daher zu einer grossen und viel Energie verbrauchenden Apparatur.

Die Erfindung schlägt demgegenüber vor, dass eine CO₂-Abtrennung mit niedrigem Wirkungsgrad auf das verdichtete Arbeitsmedium angewendet wird, um höhere CO₂-Konzentrationen im CO₂-Separator zu ermöglichen.

Die in Fig. 1 dargestellte Anlage ähnelt vom Schema her der Lösung aus der Druckschrift WO-A1-02/103176 mit dem entscheidenden Unterschied, dass ein geringerer Anteil an Kohlendioxid (etwa 10-70%) aus dem verdichteten Arbeitsmedium entfernt wird. Diese Abtrennungsstrategie gibt eine wesentlich höhere CO₂-Konzentration während des Abtrennprozesses, insbesondere bei Einspeisung von mit Sauerstoff angereicherter Luft, und reduziert so die Abtrennanforderungen an den Prozess. Diese Faktoren reduzieren im Vergleich zum herkömmlichen Hochdruck-Abtrenn-Konzept die Grösse der notwendigen Ausrüstung und die benötigten Energieströme und damit die Kosten. Zusätzlich ist in Fig. 1 ein Gas/Gas-Wärmetauscher 21 vorgesehen, in welchen das verdichtete Gas 3a Wärme an das aus dem CO₂-Separator 6 kommende verdichtete Gas 7a abgibt. Das abgetrennte CO₂ 19 kann in einer an sich bekannten Weise deponiert oder anderweitig behandelt werden.

In gleicher Weise ist die Anlage gemäss Fig. 2 vom Schema her ähnlich zum zweiten Prozess der WO-A1-02/103176. Auch hier besteht der wesentliche Unterschied wiederum darin, dass das Kohlendioxid mit einer deutlich geringeren Effektivität aus dem verdichteten Arbeitsmedium entfernt wird. Darüber hinaus kann die im Zwischenkühler entzogene Wärme in der CO₂-Abtrennsäule dazu benutzt werden, das Lösungsmittel zu regenerieren, wenn die CO₂-Abtrennung beispielsweise auf dem "amine scrubbing" basiert. Dies bedeutet, dass weniger, oder im besten Falle kein, Dampf aus dem Dampfkreislauf für den CO₂-Abtrennprozess benötigt wird. Wie beim ersten Ausführungsbeispiel reduzieren diese Faktoren die Grösse der Ausrüstung und der benötigten Energieströme, und damit die Kosten, im Vergleich zu herkömmlichen Hochdruck-Abtrenn-Konzepten.

Ein erstes Ausführungsbeispiel der Erfindung zeigt Fig. 3. In diesem Beispiel wird eine niedrige Abtrennrate dadurch erreicht, dass nur ein kleinerer Teilstrom des Arbeitsmediums dem Abtrennprozess unterzogen wird, und dass in diesem Teilstrom ein weit überwiegender Teil (70-99%) des vorhandenen Kohlendioxids entfernt wird. Der Gasstrom nach dem Verdichter 2 wird aufgeteilt und ein erster Teilstrom 3a des verdichteten Gases wird direkt zur Brennkammer 23 geführt, während ein zweiter Teilstrom 3b des verdichteten Gases zum CO₂-Separator 6 weitergeleitet wird. Durch diese Art des Vorgehens können Grösse und Kosten der CO₂-Abtrennvorrichtung gegenüber dem ersten Ausführungsbeispiel der Erfindung weiter verringert werden. Das Konzept begrenzt auch die thermodynamischen Verluste durch eine Minimierung des Temperaturabfalls zwischen dem Ausgang des Verdichters 2 und dem Eingang der Brennkammer 23. Es muss daher weniger Brennstoff verbrannt werden, um die gewünschte Verbrennungstemperatur zu erreichen, und der Wirkungsgrad ist höher im Vergleich zur Vollstromanordnung der Fig. 1. Eine Abänderung des Konzeptes besteht darin, einen Teil des aus dem CO₂-Separator austretenden, CO₂-armen Gas zu verwenden, um damit den Heissgaskanal der Turbine 10 zu kühlen (gestrichelter Pfeil zur Turbine 10 in Fig. 3). Dies hat den thermodynamischen Vorteil, dass durch die Herabsetzung der Temperatur des abgegebenen Gases der für die Kühlung der Turbine benötigte Massenstrom reduziert wird, während gleichzeitig die Einlasstemperatur der Verbrennung durch den Abtrennprozess unbeeinflusst bleibt.

Die Teilstrom-Konfiguration des zuvor beschriebenen Ausführungsbeispiels wird von einer Anlage wie in Fig. 4 dargestellt benutzt und wendet sie auf den Gasturbinen-Kreisprozess mit Zwischenkühlung an (Fig. 4). Die Mischung von Luft (oder Sauerstoff-angereicherter Luft) 1 und zurückgeführtem Rauchgas 15 wird zunächst in einem ersten Verdichter 2a verdichtet und dann heruntergekühlt (Wärmetauscher bzw. Zwischenkühler 4). Ein Teilstrom 5b des verdichteten Gases 5a strömt zum CO₂-Separator 6, wo ein weit überwiegender Teil (80-99%) des Kohlendioxids entfernt wird. Das so behandelte verdichtete Gas 7a und das nicht behandelte verdichtete Gas 5c werden wieder zusammengeführt und in einen zweiten Verdichter 2b gegeben, wo sie auf den gewünschten Arbeitsdruck verdichtet werden und dann als verdichtetes Gas 7c zur Brennkammer 23 gelangen. Durch diese Art der Prozessführung werden die Anforderungen an die Energie und die Ausrüstung für die CO₂-Abtrennung gegenüber der Anlage aus Fig. 2 reduziert. Die bei der Zwischenkühlung abgenommene Wärme kann auch hier in der CO₂-Abtrennsäule verwendet werden, um den thermodynamischen Einfluss des Abtrennprozesses auf den Kreisprozess zu minimieren.

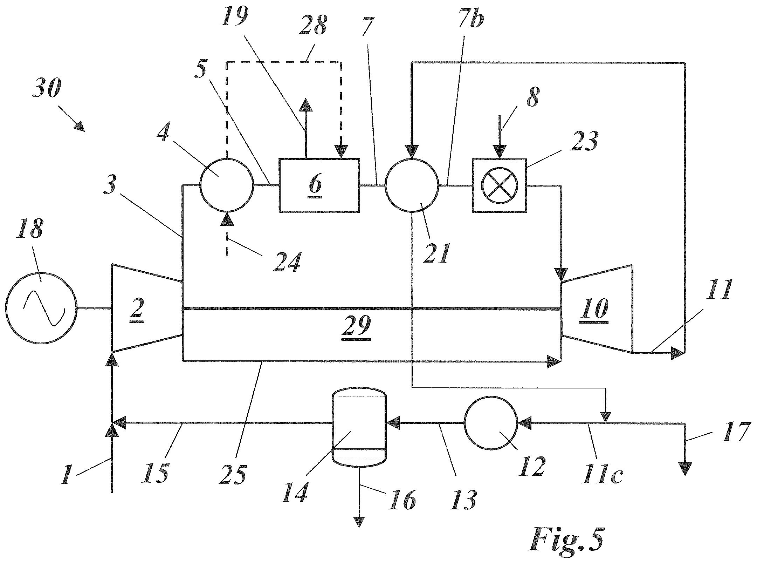

Ein weiteres Anlagenschema bezieht sich auf einen Hochdruck-CO₂-Abtrennungsprozess mit Rekuperation (Fig. 5). Das heisse Rauchgas 11 aus dem Expansionsteil (Turbine) 10 der Gasturbine 29 wird in diesem Fall zur Aufheizung des verdichteten Gases 7, welches den CO₂-Separator 6 verlässt, in einem Gas/Gas-Wärmetauscher oder Rekuperator 21 verwendet und tritt als Rauchgas 11b aus. Ein anderer Teilstrom 11c des Rauchgases 11 wird in einem Wärmetauscher 12 abgekühlt, dem kalten Rauchgas 13 wird in einem Kondensator 14 Wasser entzogen und als zurückgeführtes Rauchgas 15 mit der angesaugten Luft 1 vermischt. Dadurch kann die Temperatur zur Brennkammer 23 hin wegen der im Vergleich zur Verdichterauslasstemperatur höheren Temperatur am Ausgang der Turbine 10 erhöht werden. Das bedeutet, dass weniger Brennstoff verbrannt werden muss, um die gewünschte Verbrennungstemperatur zu erreichen, und dass so der Wirkungsgrad der Anlage zunimmt. Ein weiterer Vorteil dieses Konzeptes ist, dass die Baugrösse des Gas/Gas-Wärmetauschers bzw. Rekuperators 21 verringert werden kann, weil die treibende Kraft der Temperatur in diesem Falle im Vergleich zu den vorherigen Fällen grösser ist. Der einzige wirkliche Nachteil bei dieser Verfahrenskonfiguration ist, dass sie nur auf einfache und nicht auf Kombi-Kreisprozesse angewendet werden kann. Der Grund dafür ist darin zu suchen, dass die Temperatur aus dem Rekuperator heraus viel zu niedrig für eine effektive Nutzung in einem Abhitzedampferzeuger ist. In Fig. 5 ist durch die gestrichelten Pfeile angedeutet, dass optional Wasser 24 im Wärmetauscher 4 durch das verdichtete Gas 3 in Dampf 28 umgewandelt und der Dampf im CO₂-Separator 6 verwendet werden kann.

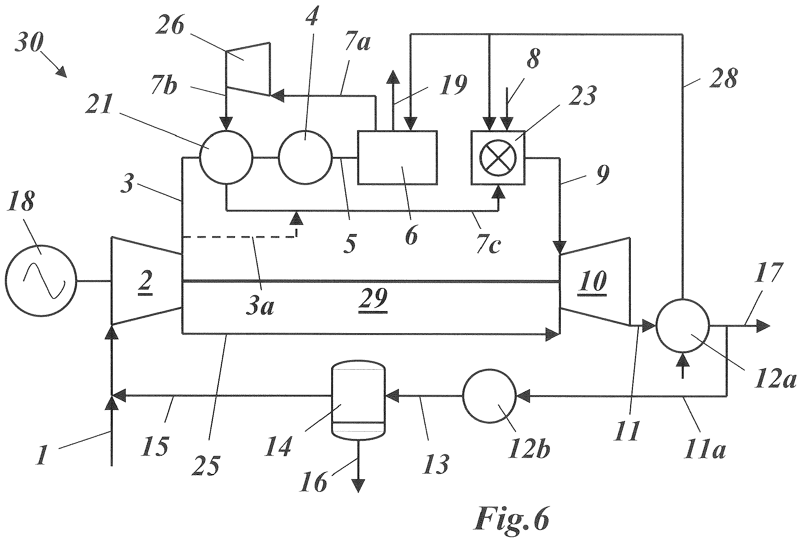

Ein weiteres Anlagenschema macht Gebrauch von der Dampfeinspritzung in die Gasturbine 29 zur Erhöhung der Ausgangsleistung des Hochdruck-CO₂-Abtrennungsprozesses (Fig. 6). Da ein Teil des Arbeitsmediums (CO₂ und Wasser) aus dem verdichteten Gas entfernt wird, nimmt der Massenstrom des verdichteten Gases 7c in die Turbine 10 hinein ab; dadurch fällt der Druck am Eintritt der Turbine 10. Dies führt zu einer Abnahme der in der Turbine 10 erzeugten Leistung. Eine Möglichkeit, dies zu umgehen, besteht darin, vor der Expansion in der Turbine 10 eine Dampfeinspritzung vorzunehmen. Um heutige Gasturbinen auf das neue Hochdruck-CO₂-Abtrennungskonzept mit Dampfeinspritzung umzurüsten, kann es notwendig sein, einen Nachverdichter 26 zwischen dem CO₂-Separator 6 und dem Gas/Gas-Wärmetauscher 21 einzufügen. Der Nachverdichter 26 verdichtet das aus dem CO₂-Separator 6 kommend verdichtete Gas 7a nach, das nachverdichtete Gas 7b tauscht in dem Gas/Gas-Wärmetauscher 21 mit dem aus dem Verdichter 2 kommenden verdichteten Gas 3 Wärme aus und wird dann als Strom 7c zur Brennkammer 23 geführt. Der eingespritzte Dampf 28, der durch das heisse Rauchgas in einem Wärmetauscher bzw. Dampferzeuger 12a erzeugt wird, erhöht im besten Fall den Eintrittsdruck der Turbine 10 auf den Nenndruck. Dies bedeutet in Verbindung mit den Druckverlusten in den Wärmetauschern 4 und 21 und dem CO₂-Separator 6 zwischen dem Verdichter 2 und der Turbine 10, dass der Verdichter einen höheren Druck liefern muss, als den, für den er eigentlich konzipiert ist. Die "surge margin" des Verdichters kann dadurch gefährdet sein. Eine Möglichkeit besteht daher darin, einen Nachverdichter 26 vorzusehen, der den Druck ausreichend erhöht, um den Druckverlust in den erwähnten Anlagenteilen auszugleichen. Der Dampf für die Einspritzung kann durch die Wärmequellen des Kreisprozesses erzeugt werden, wie z.B. das Rauchgas oder sogar das heisse verdichtete Gas am Ausgang des Verdichters. Dieses Verfahren kann auf das erste bis fünfte Ausführungsbeispiel der Erfindung angewendet werden, d.h., in Verbindung mit der Vollstrom- und Teilstrom-CO₂-Abtrennung mit Zwischenkühlung und Rekuperation.

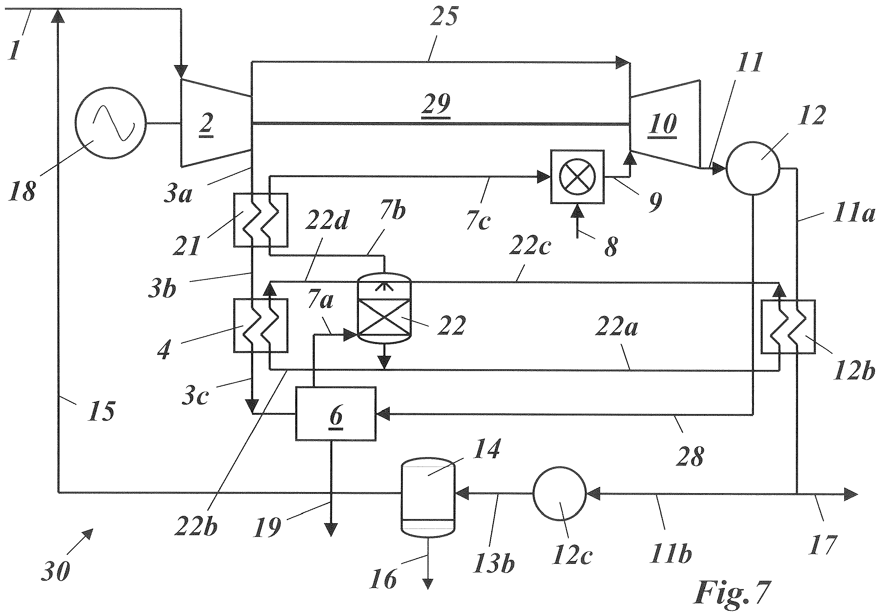

Ein anderes Anlagenschema ist sehr ähnlich zum vorherigen Schema; anstelle der Dampfeinspritzung wird jedoch in diesem Prozess das Arbeitsmedium in einer vor der Brennkammer angeordneten Befeuchtungseinrichtung (Befeuchtungsturm 22) befeuchtet (Fig. 7). Der Unterschied zwischen der Dampfeinspritzung und der Befeuchtung liegt darin, dass man im letztgenannten Fall geringwertige Energie für die Befeuchtung benutzen kann und so den Wirkungsgrad der Anlage steigert. Kaltes Wasser 22a,b wird in den Wärmetauschern 4 und 12b durch das verdichtete Gas 3a,b und das heisse Rauchgas 11a erwärmt und als warmes Wasser 22c,d im Befeuchtungsturm 22 mit dem Arbeitsmedium im Gegenstrom in einem "packed bed" in Kontakt gebracht. Ein Teil des Wassers verdampft und das im Turm herabfliessende Wasser wird gekühlt. Die Energie zum Aufwärmen des Wassers kann - wie bereits erwähnt - dem Rauchgas 11a entnommen werden, oder dem in den CO₂-Separator 6 eintretenden verdichteten Gas 3a,b,c, oder von einem im Kreisprozess vorhandenen Zwischenkühler (siehe Fig. 2 und 4). Der Vorteil der Verwendung von niedrigwertiger Energie für die Verdampfung ist noch deutlicher für Kombianlagen, wo es im Fall der Dampfeinspritzung notwendig ist, den Dampf abzuzweigen, der sonst in der Dampfturbine eingesetzt würde. Dieses Verfahren kann auf die weiter oben erläuterten Ausführungsbeispiele der Erfindung angewendet werden, d.h. in Kombination mit der Teilstrom-CO₂-Abtrennung mit Zwischenkühlung und Rekuperation.

Die CO₂-Abtrennungsprozesse könnten in all den beschriebenen Konzepten beispielsweise einen chemischen Absorptionsprozess umfassen, der ein Aminbasiertes Lösungsmittel oder ein Natriumcarbonat-Lösungsmittel o. ä. verwendet. In herkömmlicher Weise würde das Arbeitsmedium mit dem Lösungsmittel in einem Absorptionsturm in Kontakt gebracht werden, wo CO₂ aus dem Gas in die flüssige Phase übertragen wird und ein CO₂-armes Gas austritt. Alternativ kann eine Membran als Kontaktelement wirken. Dies hat den Vorteil, dass die beiden Ströme getrennt gehalten werden und einen Übertritt des Lösungsmittels in den Gasstrom verhindern und so die Turbomaschinen geschützt werden. Darüber hinaus können Baugrösse, Gewicht und Kosten reduziert werden. Das aus dem Absorber oder der Membraneinheit austretende, mit CO₂ angereicherte Lösungsmittel wird in einer Trennsäule regeneriert und für den erneuten Gebrauch zurückgeführt. Andere Beispiele für einen CO₂-Abtrennungsprozess sind die Physikalische Absorption, Kombinationen von chemischer und physikalischer Absorption, Adsorption auf Festkörper, und Kombinationen davon.

In den Fig. 1 bis 4 ist durch einen gestrichelten Pfeil angedeutet, dass dem Prozess nach der CO₂-Abtrennung und ggf. nach einer weiteren Verdichtung in einem zweiten Verdichter 2b Sauerstoff 20 zugesetzt werden kann, wie dies bereits am Anfang erläutert worden ist.

### BEZUGSZEICHENLISTE

- 1: Luft (bzw. angereicherte Luft)
- 2,2a,2b: Verdichter
- 3,3a,3b,3c: verdichtetes Gas
- 4: Wärmetauscher
- 5,5a,5b,5c: verdichtetes Gas
- 6: CO₂-Separator
- 7,7a,7b,7c: verdichtetes Gas
- 8: Brennstoff
- 9: heisses Rauchgas
- 10: Expansionsteil (Turbine)
- 11,11a,11b,11c: Rauchgase
- 12,12a,b: Wärmetauscher, Abhitzedampferzeuger (HRSG)
- 13: kaltes Rauchgas
- 14: Kondensator
- 15: zurückgeführtes Rauchgas
- 16: kondensiertes Wasser
- 17: emittiertes Rauchgas
- 18: Generator
- 19: abgetrenntes CO₂
- 20: Sauerstoff
- 21: Gas/Gas-Wärmetauscher
- 22: Befeuchtungsturm
- 22a,22b: kaltes Wasser
- 22c,22d: warmes Wasser
- 23: Brennkammer
- 24: Wasser
- 25: Kühlluft
- 26: Nachverdichter
- 27: CO₂
- 28: Dampf
- 29: Gasturbine
- 30: Energieerzeugungsanlage

## Patentansprüche

1. Verfahren zur Erzeugung von Energie in einer eine Gasturbine (29) umfassenden Energieerzeugungsanlage (30), bei welchem Verfahren in einem ersten Schritt ein Luft (1) enthaltendes Gas in einem ersten Verdichter (2, 2a) der Gasturbine (29) verdichtet wird, in einem zweiten Schritt das verdichtete Gas (3a, 3b,) unter Zugabe von Brennstoff (8) in einer Brennkammer (23) einer Verbrennung zugeführt wird, in einem dritten Schritt das heisse Rauchgas (9) aus der Brennkammer (23) in einem Expansionsteil bzw. einer einen Generator (18) antreibenden Turbine (10) der Gasturbine (29) unter Arbeitsleistung entspannt wird, und in einem vierten Schritt ein Teilstrom des entspannten Rauchgases (11) zum Eingang des ersten Verdichters (2, 2a) zurückgeführt und dem Luft (1) enthaltenden Gas zugemischt wird, und bei welchem Verfahren aus dem verdichteten Gas (3a, 3b,) vor dem zweiten Schritt in einem CO₂-Separator (6) Kohlendioxid (CO₂) abgetrennt wird, **dadurch gekennzeichnet, dass** zur Ermöglichung erhöhter CO₂-Konzentrationen im CO₂-Separator (6) nicht mehr als etwa 70% des im verdichteten Gas (3a, 3b,) enthaltenen Kohlendioxids aus dem verdichteten Gas (3a, 3b) entfernt werden;der gesamte Strom des verdichteten Gases (3a, 3b,) in einen grösseren und kleineren Teilstrom (3a, 3b) unterteilt wird, und dass nur der kleinere Teilstrom (3b) durch den CO₂-Separator (6) geführt und dort mehr als 50% des im verdichteten Gas (3b) enthaltenen Kohlendioxids aus dem verdichteten Gas (3b) entfernt werden; wobei das aus dem CO₂-Separator (6) kommende verdichtete Gas (7a) zur Brennkammer (23) geleitet wird.

2. Verfahren nach Anspruch 1, **dadurch gekennzeichnet, dass** zwischen 70% und 99% des im verdichteten Gas (3b) enthaltenen Kohlendioxids aus dem verdichteten Gas (3b) entfernt werden.

3. Verfahren nach einem der Ansprüche 1 und 2, **dadurch gekennzeichnet, dass** das verdichtete Gas (3a, 3b,) vor dem Eintritt in den CO₂-Separator (6) in einem Wärmetauscher (4) abgekühlt wird.

4. Verfahren nach einem der Ansprüche 1 bis 3, **dadurch gekennzeichnet, dass** das in der Turbine entspannte Rauchgas (11) in einem Wärmetauscher (12) abgekühlt oder in einem Abhitzedampferzeuger (12) zur Erzeugung von Dampf verwendet wird.

5. Verfahren nach einem der Ansprüche 1 bis 4, **dadurch gekennzeichnet, dass** dem zum Eingang des ersten Verdichters (2, 2a) zurückgeführten Teilstrom des Rauchgases vor der Vermischung mit dem Luft (1) enthaltenden Gas in einem Kondensator (14) Wasser entzogen wird.

6. Verfahren nach Anspruch 1, **dadurch gekennzeichnet, dass** das aus dem CO₂-Separator (6) kommende verdichtete Gas (7a) direkt zur Brennkammer (23) geleitet wird.

7. Verfahren nach Anspruch 1, **dadurch gekennzeichnet, dass** das aus dem CO₂-Separator (6) kommende verdichtete Gas (7a) zunächst in einem Gas/GasWärmetauscher (21) dem aus dem ersten Verdichter (2) kommenden verdichteten Gas (3b) Wärme entzieht und dann zur Brennkammer (23) geleitet wird.

8. Verfahren nach Anspruch 1, **dadurch gekennzeichnet, dass** das aus dem CO₂-Separator (6) kommende verdichtete Gas (7a) in einem zweiten Verdichter der Gasturbine (29) weiter verdichtet wird, und dass das weiter verdichtete Gas (7c) der Brennkammer (23) zugeführt wird.

9. Verfahren nach einem der Ansprüche 1 bis 8, **dadurch gekennzeichnet, dass** als Luft (1) mit Sauerstoff angereicherte Luft verwendet wird.

10. Verfahren nach einem der Ansprüche 1 bis 9, **dadurch gekennzeichnet, dass** das aus dem CO₂-Separator (6) kommende verdichtete Gas (7) in einem Gas/Gas-Wärmetauscher (21) vordem Eintritt in die Brennkammer (23) durch aus der Turbine (10) austretende heissen Rauchgas (11) vorgewärmt wird.

11. Verfahren nach einem der Ansprüche 1 bis 10, **dadurch gekennzeichnet, dass** mittels des aus der Turbine (10) austretenden heissen Rauchgases (11) Dampf erzeugt und der erzeugte Dampf teilweise in die Brennkammer (23) eingespritzt und teilweise im CO₂-Separator (6) verwendet wird.

12. Verfahren nach Anspruch 11, **dadurch gekennzeichnet, dass** das aus dem CO₂-Separator (6) kommende verdichtete Gas (7a) in einem Nachverdichter (26) nachverdichtet wird, und dass das nachverdichtete Gas (7b) in einem Gas/Gas-Wärmetauscher (21) mit dem aus dem ersten Verdichter (2) kommenden verdichteten Gas (3) Wärme austauscht.

13. Verfahren nach einem der Ansprüche 1 bis 10, **dadurch gekennzeichnet, dass** das aus dem CO₂-Separator (6) kommende verdichtete Gas (7a) vor dem Eintritt in die Brennkammer (23) in einer Befeuchtungsvorrichtung befeuchtet wird, und dass das befeuchtete Gas vor dem Eintritt in die Brennkammer (23) in einem Gas/Gas-Wärmetauscher (21) dem aus dem ersten Verdichter (2) austretenden verdichteten Gas (3a) Wärme entzieht.

14. Energieerzeugungsanlage (30) zur Durchführung des Verfahrens nach Anspruch 1, umfassend eine Gasturbine (29) mit einem ersten Verdichter (2, 2a) mit einem Ein- und Ausgang, mit einer Brennkammer (23), welche einen ersten Eingang für verdichtetes Gas (7b, 7c), einen zweiten Eingang für Brennstoff (8) und einen Ausgang für das heisse Rauchgas (9) aufweist, und mit einer Turbine (10) mit einem Ein- und Ausgang, wobei der Ausgang der Brennkammer (23) mit dem Eingang der Turbine (10) verbunden ist, der Ausgang der Turbine (10) über einen Kondensator (14) mit dem Eingang des ersten Verdichters (2, 2a) in Verbindung steht, der Ausgang des ersten Verdichters (2, 2a) mit dem ersten Eingang der Brennkammer (23) in Verbindung steht, und an den Ausgang des ersten Verdichters (2, 2a) ein CO₂-Separator (6), der dazu ausgelegt ist mehr als 50% des im verdichteten Gas (3b) enthaltenen Kohlendioxids aus dem verdichteten Gas (3b) zu entfernen. eingangsseitig über einen Wärmetauscher (4) angeschlossen ist und ausgangsseitig mit dem ersten Eingang der Brennkammer (23) in Verbindung steht, **dadurch gekennzeichnet, dass** der CO₂-Separator (6) derart angeschlossen und/oder ausgelegt ist, dass er nicht mehr als 70% des Kohlendioxids des aus dem ersten Verdichter (2, 2a) kommenden verdichteten Gases abtrennt; dass vom Ausgang des ersten Verdichters (2, 2a) zwei Verbindungsleitungen parallel zum ersten Eingang der Brennkammer (23) führen, und dass der CO₂-Separator (6) in eine dieser Verbindungsleitungen eingefügt ist.

15. Energieerzeugungsanlage nach Anspruch 14, **dadurch gekennzeichnet, dass** zwischen dem Ausgang der Turbine (10) und dem Kondensator (14) ein zweiter Wärmetauscher oder Abhitzedampferzeuger (12, 12a,b) angeordnet ist.

16. Energieerzeugungsanlage nach einem der Ansprüche 14 und 15 , **dadurch gekennzeichnet, dass** zwischen dem Ausgang des CO₂-Separators (6) und dem ersten Eingang der Brennkammer (23) ein zweiter Verdichter angeordnet ist.

17. Energieerzeugungsanlage nach einem der Ansprüche 14 bis 16, **dadurch gekennzeichnet, dass** zwischen dem Ausgang des CO₂-Separators (6) und dem ersten Eingang der Brennkammer (23) ein mit dem Ausgang der Turbine (10) in Verbindung stehender Gas/Gas-Wärmetauscher (21) angeordnet ist.

## Claims

1. Method for generating power in a power generation plant (30) comprising a gas turbine (29), in which method:
in a first step, a gas containing air (1) is compressed in a first compressor (2, 2a) of the gas turbine (29);
in a second step, the compressed gas (3, 3a) is supplied to a combustion chamber (23) with the addition of fuel (8) for combustion;
in a third step, the hot flue gas (9) from the combustion chamber (23) is expanded in an expansion part or a turbine (10) of the gas turbine (29) driving a generator (18) to perform work; and
in a fourth step, a partial flow of the expanded flue gas (11) is returned to the inlet of the first compressor (2, 2a) and mixed with the gas containing air (1);
in which method, before the second step, carbon dioxide (CO₂) is separated from the compressed gas (3a, 3b) in a CO₂ separator (6),
**characterised in that** to allow increased CO₂ concentrations in the CO₂ separator (6), no more than around 70% of the carbon dioxide contained in the compressed gas (3a, 3b) is removed from the compressed gas (3a, 3b);
the entire flow of the compressed gas (3a, 3b) is divided into a larger and a smaller partial flow (3a, 3b), and only the smaller partial flow (3b) is conducted through the CO₂ separator (6) and there more than 50% of the carbon dioxide contained in the compressed gas (3b) is removed from the compressed gas (3b);
wherein the compressed gas (7a) leaving the CO₂ separator (6) is conducted to the combustion chamber (23).

2. Method according to claim 1, **characterised in that** between 70% and 99% of the carbon dioxide contained in the compressed gas (3b) is removed from the compressed gas (3b).

3. Method according to one of claims 1 and 2, **characterised in that** the compressed gas (3a, 3b) is cooled in a heat exchanger (4) before entering the CO₂ separator (6).

4. Method according to any of claims 1 to 3, **characterised in that** the flue gas (11) expanded in the turbine is cooled in a heat exchanger (12) or used in a waste heat steam generator (12) to produce steam.

5. Method according to any of claims 1 to 4, **characterised in that** in a condenser (14), water is extracted from the partial flow of flue gas returned to the inlet of the first compressor (2, 2a) before it is mixed with the gas containing air (1).

6. Method according to claim 1, **characterised in that** the compressed gas (7a) leaving the CO₂ separator (6) is conducted directly to the combustion chamber (23).

7. Method according to claim 1, **characterised in that** the compressed gas (7a) leaving the CO₂ separator (6) firstly extracts heat in a gas/gas heat exchanger (21) from the compressed gas (3b) leaving the first compressor (2) and is then conducted to the combustion chamber (23).

8. Method according to claim 1, **characterised in that** the compressed gas (7a) leaving the CO₂ separator (6) is further compressed in a second compressor of the gas turbine (29), and that the further compressed gas (7c) is supplied to the combustion chamber (23).

9. Method according to any of claims 1 to 8, **characterised in that** air enriched with oxygen is used as the air (1).

10. Method according to any of claims 1 to 9, **characterised in that** before entering the combustion chamber (23), the compressed gas (7) leaving the CO₂ separator (6) is preheated in a gas/gas heat exchanger (21) by the hot flue gas (11) emerging from the turbine (10).

11. Method according to any of claims 1 to 10, **characterised in that** steam is produced by means of the hot flue gas (11) leaving the turbine (10) and the produced steam is partially injected into the combustion chamber (23) and partially used in the CO₂ separator (6).

12. Method according to claim 11, **characterised in that** the compressed gas (7a) leaving the CO₂ separator (6) is post-compressed in a post-compressor (26), and the post-compressed gas (7b) exchanges heat in a gas/gas heat exchanger (21) with the compressed gas (3) leaving the first compressor (2).

13. Method according to any of claims 1 to 10, **characterised in that** before entering the combustion chamber (23), the compressed gas (7a) leaving the CO₂ separator (6) is wetted in a wetting device, and that before entering the combustion chamber (23), the wetted gas extracts heat in a gas/gas heat exchanger (21) from the compressed gas (3a) leaving the first compressor (2).

14. Power generation plant (30) for performance of the method according to claim 1, comprising a gas turbine (29) with a first compressor (2, 2a) with an inlet and an outlet,
with a combustion chamber (23) which has a first inlet for compressed gas (7b, 7c), a second inlet for fuel (8) and an outlet for the hot flue gas (9), and
with a turbine (10) with an inlet and an outlet,
wherein the outlet from the combustion chamber (23) is connected to the inlet of the turbine (10),
the outlet from the turbine (10) is connected via a condenser (14) to the inlet of the first compressor (2,2a),
the outlet of the first compressor (2, 2a) is connected to the first inlet of the combustion chamber (23), and
at the outlet of the first compressor (2, 2a), a CO₂ separator (6), which is configured to remove more than 50% of the carbon dioxide contained in the compressed gas (3b) from the compressed gas (3b), is connected on the inlet side via a heat exchanger (4) and on the outlet side to the first inlet of the combustion chamber (23),
**characterised in that**
the CO₂ separator (6) is connected and/or configured such that it separates no more than 70% of the carbon dioxide from the compressed gas leaving the first compressor (2, 2a);
that from the outlet of the first compressor (2, 2a), two connecting lines lead in parallel to the first inlet of the combustion chamber (23), and
that the CO₂ separator (6) is inserted in one of these connecting lines.

15. Power generation plant according to claim 14, **characterised in that** a second heat exchanger or waste heat steam generator (12, 12a, b) is arranged between the outlet of the turbine (10) and the condenser (14).

16. Power generation plant according to one of claims 14 and 15, **characterised in that** a second compressor is arranged between the outlet of the CO₂ separator (6) and the first inlet of the combustion chamber (23).

17. Power generation plant according to any of claims 14 to 16, **characterised in that** a gas/gas heat exchanger (21) connected to the outlet of the turbine (10) is arranged between the outlet of the CO₂ separator (6) and the first inlet of the combustion chamber (23).

## Revendications

1. Procédé pour la production d'énergie dans une installation (30) de production d'énergie comprenant une turbine à gaz (29), procédé dans lequel, dans une première étape, on comprime un gaz contenant de l'air (1) dans un premier compresseur (2, 2a) de la turbine à gaz (29), dans une deuxième étape, on envoie le gaz comprimé (3a, 3b), avec addition d'un combustible (8), dans une chambre de combustion (23) d'une installation de combustion, dans une troisième étape, on détend les fumées chaudes (9) sortant de la chambre de combustion (23) dans une partie expansion ou dans une turbine (10), actionnant un générateur (18), de la turbine à gaz (29), avec production de travail, et, dans une quatrième étape, on renvoie un courant partiel des fumées détendues (11) à l'entrée du premier compresseur (2, 2a) et on le mélange au gaz contenant de l'air (1) ; procédé dans lequel on sépare du gaz comprimé (3a, 3b) du dioxyde de carbone (CO₂) dans un séparateur de CO₂ (6) avant la deuxième étape, **caractérisé en ce que**, pour permettre une augmentation des concentrations de CO₂ dans le séparateur de CO₂ (6), on élimine du gaz comprimé (3a, 3b) une quantité non supérieure à environ 70 % du dioxyde de carbone contenu dans le gaz comprimé (3a, 3b) ; on subdivise le courant total du gaz comprimé (3a, 3b) en un grand courant partiel et un petit courant partiel (3a, 3b), et **en ce que** seul le petit courant partiel (3b) traverse le séparateur de CO₂ (6), et on y élimine du gaz comprimé (3b) plus de 50 % du dioxyde de carbone contenu dans le gaz comprimé (3b) ; le gaz comprimé (7a) provenant du séparateur de CO₂ (6) étant envoyé à la chambre de combustion (23).

2. Procédé selon la revendication 1, **caractérisé en ce qu'**on élimine du gaz comprimé (3b) une quantité comprise entre 70 % et 99 % du dioxyde de carbone contenu dans le gaz comprimé (3b).

3. Procédé selon l'une des revendications 1 et 2, **caractérisé en ce qu'**on refroidit dans un échangeur de chaleur (4), avant sa pénétration dans le séparateur de CO₂ (6), le gaz comprimé (3a, 3b).

4. Procédé selon l'une des revendications 1 à 3, **caractérisé en ce qu'**on refroidit dans un échangeur de chaleur (12) les fumées (11) détendues dans la turbine, ou on les utilise dans une chaudière de récupération (12) pour produire de la vapeur.

5. Procédé selon l'une des revendications 1 à 4, **caractérisé en ce que**, dans un condenseur (14), on soutire de l'eau du courant partiel des fumées, renvoyé à l'entrée du premier compresseur (2, 2a), avant mélange avec le gaz contenant de l'air (1).

6. Procédé selon la revendication 1, **caractérisé en ce qu'**on envoie directement à la chambre de combustion (23) le gaz comprimé (7a) provenant du séparateur de CO₂ (6).

7. Procédé selon la revendication 1, **caractérisé en ce qu'**on soutire d'abord, dans un échangeur de chaleur gaz/gaz (21), de la chaleur à partir du gaz comprimé (7a) provenant du séparateur de CO₂ (6), pour l'envoyer au gaz comprimé (3b) provenant du premier compresseur (2), puis on l'envoie à la chambre de combustion (23).

8. Procédé selon la revendication 1, **caractérisé en ce qu'**on soumet à une compression plus poussée dans un deuxième compresseur de la turbine à gaz (29) le gaz comprimé (7a) provenant du séparateur de CO₂ (6), et **en ce qu'**on envoie à la chambre de combustion (23) le gaz (7c) ayant subi une compression plus poussée.

9. Procédé selon l'une des revendications 1 à 8, **caractérisé en ce qu'**on utilise en tant qu'air (1) de l'air enrichi en oxygène.

10. Procédé selon l'une des revendications 1 à 9, **caractérisé en ce qu'**on préchauffe le gaz comprimé (7) provenant du séparateur de CO₂ (6) dans un échangeur de chaleur gaz/gaz (21) avant pénétration dans la chambre de combustion (23), grâce aux fumées chaudes (11) sortant de la turbine (10).

11. Procédé selon l'une des revendications 1 à 10, **caractérisé en ce qu'**on produit de la vapeur à l'aide des fumées chaudes (11) sortant de la turbine (10), et on injecte partiellement dans la chambre de combustion (23) la chaleur produite, et on l'utilise partiellement dans le séparateur de CO₂ (6).

12. Procédé selon la revendication 11, **caractérisé en ce qu'**on soumet à une post-compression dans un post-compresseur (26) le gaz comprimé (7a) provenant du séparateur de CO₂ (6), et **en ce qu'**on procède, dans un échangeur de chaleur gaz/gaz (21), à un échange de chaleur entre le gaz post-comprimé (7b) et le gaz comprimé (3) provenant du premier compresseur (2).

13. Procédé selon l'une des revendications 1 à 10, **caractérisé en ce que**, dans un équipement d'humidification, on humidifie avant sa pénétration dans la chambre de combustion (23) le gaz comprimé (7a) provenant du séparateur de CO₂ (6), et **en ce qu'**on soutire de la chaleur, dans un échangeur de chaleur gaz/gaz (21), à partir du gaz humidifié avant sa pénétration dans la chambre de combustion (23), pour l'envoyer au gaz comprimé (3a) sortant du premier compresseur (2).

14. Installation de production d'énergie (30) destinée à la mise en oeuvre du procédé selon la revendication 1, comprenant une turbine à gaz (29) comportant un premier compresseur (2, 2a) possédant une entrée et une sortie, une chambre de combustion (23), qui présente une première entrée pour du gaz comprimé (7b, 7c), une deuxième entrée pour un combustible (8) et une sortie pour les fumées chaudes (9), et une turbine (10) pourvue d'une entrée et d'une sortie, la sortie de la chambre de combustion (23) étant reliée à l'entrée de la turbine (10), la sortie de la turbine (10) étant, par l'intermédiaire d'un condenseur (14), reliée à l'entrée du premier compresseur (2, 2a), la sortie du premier compresseur (2, 2a) étant reliée à la première entrée de la chambre de combustion (23), et un séparateur de CO₂ (6), qui est configuré pour éliminer du gaz comprimé (3b) plus de 50 % du dioxyde de carbone contenu dans le gaz comprimé (3b), étant côté entrée, par l'intermédiaire d'un échangeur de chaleur (4), raccordé à la sortie du premier compresseur (2, 2a), et côté sortie étant raccordé à la première entrée de la chambre de combustion (23), **caractérisée en ce que** le séparateur de CO₂ (6) est raccordé et/ou conçu de telle sorte qu'il sépare une quantité non supérieure à 70 % du dioxyde de carbone du gaz comprimé provenant du premier compresseur (2, 2a) ; **en ce que**, à partir de la sortie du premier compresseur (2, 2a), deux conduites de liaison courent parallèlement à la première entrée de la chambre de combustion (23), et **en ce que** le séparateur de CO₂ (6) est inséré dans l'une de ces conduites de liaison.

15. Installation de production d'énergie selon la revendication 14, **caractérisée en ce qu'**entre la sortie de la turbine (10) et le condenseur (14) est disposé un deuxième échangeur de chaleur ou une deuxième chaudière de récupération (12, 12a, b).

16. Installation de production d'énergie selon l'une des revendications 14 et 15, **caractérisée en ce qu'**un deuxième compresseur est disposé entre la sortie du séparateur de CO₂ (6) et la première entrée de la chambre de combustion (23).

17. Installation de production d'énergie selon l'une des revendications 14 à 16, **caractérisée en ce qu'**un échangeur de chaleur gaz/gaz (21), en liaison avec la sortie de la turbine (10), est disposé entre la sortie du séparateur de CO₂ (6) et la première entrée de la chambre de combustion (23).
